# EUROPEAN PATENT APPLICATION

(11) **EP 3 868 249 A1**
(43) Date of publication of application: **25.08.2021**
(21) Application number: 18932325.6
(22) Date of filing: 15.10.2018
(51) Int. Cl.: A45D 31/00

(54) **FALSE NAILS AND METHOD FOR APPLYING SAME**

(71) Applicant: AI Co., Ltd, Oota-ku Tokyo 144-0032 (JP)
(72) Inventor: OMIRI, Yoshimi, Tokyo 144032 (JP)
(74) Representative: Murgitroyd & Company
(86) International application number: PCT/JP2018/038292
(87) International publication number: WO 2020/079726

(57) **Abstract**

[Problem to be solved]

The conventional artificial nail for decoration has been made of a plastic which is difficult to degrade naturally and there has been a risk to affect the human body and environment. Further, the conventional artificial nail has limited transpiration activity and reduced longevity. A gel nail also has a risk of allergic reaction.

[Solution]

The artificial nail of the present invention is formed along a shape of a nail, characterized in that the artificial nail comprises a synthetic resin in which a main ingredient is a biomass plastic and has a function of not easily preventing transpiration activity of the nail bed. The nail is characterized in that not only a dye but also a lamé, ornamentation, or printing are included in the resin in order not to damage design even if the surface of the artificial nail is polished and that the artificial nails are formed by being arranged in the same order as the alignment of the nail of the thumb to the pinkie finger. Use of specific material and structure of the present invention enables to spread a liquid or viscous adhesive over the surface of the nail and the structure improves adhesiveness between both sides. Further, an operation method is characterized in that buffing or covering of the surface of the nail with a coating forming component is used.

## Description

### Technical Field

The present invention relates to an artificial nail and an operation method thereof. In particular, the present invention relates to an artificial nail and an operation method thereof which can simplify operation steps as compared to those of a sculpture nail or gel nail.

### Background Art

As a conventional artificial nail for decoration, a hard one made of ABS resin or that made of soft material such as elastomer is known.
Patent Literature 1: JP2006-141939

### Summary of Invention

### Technical Problem to be solved by Invention

However, the hardness or softness of the artificial nail is not the main reason for difficulties to handle the artificial nail. In common with conventional artificial nails for decoration, putting the artificial nail on the nail with any nail glue in which the base resin is cyanoacrylate, double sided tape, and polymer- or gummi-like adhesive causes a gap or step whose thickness is about 0.6 mm to that where a hair can be inserted between one's own nail and the artificial nail. This has caused the problems of feeling uncomfortable, risk of injury by peeling off one's own nail together with the artificial nail, and reduced endurance (poor endurance) due to weakening of adhesion force by pooled water between the artificial nail and one's own nail.

The size of one's own nail is not necessarily the same as the size of an adhesive surface in a one-touch type artificial nail for decoration having an adhesive layer. When the adhesive portion protrudes from one's own nail or the amount of adhesive is insufficient, unsanitary conditions such as accumulation of dust on the adhesive surface with constant adhesiveness or on the back side of one's own nail may be caused. This has caused disease problems such as infections from staphylococci or candida and green nail due to pseudomonas aeruginosa.

Humans can move their fingertip delicately, adjust their force, and operate something because the nail protects the fingertip of both the hands and feet and plays a role of support when grabbing an object or applying force. Therefore, if the artificial nail is too soft, there are also problems that an uncomfortable feeling or unpleasant feeling may be caused and the applied decoration or the coating may easily come off.

A ready-made artificial nail for decoration is beautiful because the artificial nail has various kinds of nail edge shapes and the position of high-point is completed. However, the shapes of the nails have individual differences, and the sizes, shapes, and C-curves of the same fingers of the same person are different between the left and right hands. Thus, 20 to 36 artificial nails for decoration with a ready-made design per 10 fingers are generally included in a product. Nevertheless, the artificial nail cannot fit to one's own nail of a consumer unless otherwise the consumer adjusts the size and length including a sideline by trimming the artificial nail using a file by oneself after selecting the artificial nails according to the C-curve of each's own nail. It has been difficult to provide an artificial nail which is adaptable for anyone.

The artificial nail is continuously wearable. However, there is the gap or step between one's own nail and the conventional artificial nail and the conventional artificial nail has low oxygen and moisture permeability. Therefore, the wearing time of the artificial nail has been limited to a few hours to at most about one (1) week in view of sanitary aspects and stability of the adhesive surface even if the artificial nail is worn taking into consideration the sense of size such as dimensions, length, and C-curve, design, and balance.

For the above reasons, nail care and nail art are currently done at a nail salon using mainly soak-off type polyurethane-based soft gel. However, the operation cost is high because a nail technician who performs high quality operation needs high skill, knowledge, and experience. It takes about one (1) to two (2) hours to make a general design. A person who will have their nails done has to go to the salon every month in order to remove the gel nail and replace it with a new one whenever their own nails have grown longer.

A method called "fill-in" (filling) is known. However, replacing is more realistic in normal salon work than filling because it takes less time and trouble to remove the gel nail. However, in many cases, it is necessary to use acetone solution and file the nail in order to remove the gel nail. As a result, the problems that one's own nail becomes thin by filing and brittle by drying due to the defatting function of acetone have occurred frequently.

There are also problems that the artificial nail made of polyvinyl chloride may emit harmful smoke when burning, uncured resins such as HEMA contained in the gel nail may induce an allergic reaction, and the gel nail may contain bisphenol A which is an endocrine disruptor. However, there are no regulations because artificial nails are treated as a miscellaneous article.

The nail technician is confronted with the risk of health hazards during operation by being exposed to formaldehyde or VOC (Volatile Organic Compounds) and inhaling a lot of dusts such as human nail dust and gel nail shavings. There are concerns about unknown risks and effects on the human body and environment provided by naturally non-degradable plastic microparticles containing the above substances. In consideration of the above problems, the aim of the present invention is to provide a novel artificial nail and operation method thereof.

### Means to solve the Problem of the Invention

The present invention relates to an artificial nail, wherein the artificial nail comprises a synthetic resin comprising a biomass plastic and wherein the artificial nail is formed along a nail shape. A lamé, ornamentation, or printing is included in the resin. The design on the artificial nail is not damaged easily when the surface of the artificial nail is polished. The artificial nails are formed by being arranged in the same order as the alignment of the nail from the thumb to the pinkie finger. The present invention relates to an operation method of an artificial nail characterized in use of specific material and structure or arrangement as the artificial nail which enables to spread an adhesive between the artificial nail and the surface of a nail to thus adhere both sides closely, followed by buffing or covering of the surface of the nail with a coating forming component.

### Advantageous Effects of Invention

The artificial nail and the operation method of the present invention can prevent an uncomfortable feeling by making it difficult to cause hooking and lifting because the artificial nail and one's own nail can be adhered to each other without a gap and the artificial nail can cover the step or it can be buffed out. Further, the effect of the material and structure of the artificial nail and the operation method of the present invention can prevent any extra adhesive surface from occurring, pooling water between one's own nail and the adhesive surface, the occurrence of green nail, and can let the artificial nail last longer.

The present invention can protect the nail and fingertip and makes it easy to pick something up with the fingertips as compared to the conventional artificial nails because the artificial nail of the present invention has both moderate softness and hardness, and the thickness and length can be altered freely by the feature of the operation method.

The artificial nail of the present invention can be adapted to anyone because the shape of the artificial nail of the present invention is changeable according to the C-curve and it is easy to process the shape such as length, thickness, and design of the nail edge secondarily by the specific material and structure or arrangement of the artificial nail. The artificial nail of the present invention can make it difficult to damage the nail and can shorten the operation time because the artificial nail of the present invention can be removed easily as compared to a conventional one. The artificial nail of the present invention is friendly on one's own nail and environment.

### Brief Description of Drawings

[Fig. 1] Fig. 1 shows a structure view applied to one embodiment.
[Fig. 2] Fig. 2 shows a cross-section view applied to one embodiment.
[Fig. 3] Fig. 3 shows a process sheet applied to one embodiment.
[Fig. 4] Fig. 4 shows a set of structure views A and B (injection molding) of the artificial nail of the present invention and a set of structure views of C and D of the artificial nail manufactured by another method.
[Fig. 5] Fig. 5 shows a set of design variations and cross-section views thereof.
[Fig. 6] Fig. 6 shows a set of comparative views of the conventional decorative nail (a) and the artificial nail of the present invention (b).

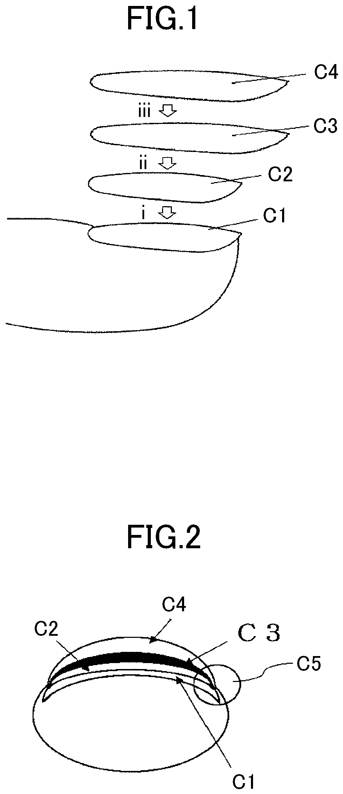

Fig. 2 is a cross-section of the nail edge when wearing the artificial nail of the present invention. The artificial nail is buffed or covered with a coating forming component in order not to generate a step between the artificial nail and one's own nail and thereby hooking and lifting of the artificial nail can be prevented (see C5). The artificial nail of the present invention C3 preferably covers one's own nail and the artificial nail is preferably covered with C4 in order to observe not a layer structure but a unified structure from the side of the nail edge (edge portion). The present invention can prevent chipping of the nail edge and peeling off of the artificial nail by the structure in which the artificial nail is along the curved nail structure, the characteristic of the material, and the operation method.

As shown in Fig. 1, the artificial nail of the present invention has a smooth curve overall and forms along one's own nail. The optimum thickness of the portion located on a nail plate is about 0.2 to 2.5 mm depending on the thickness of the parts embedded therein, which is thinner than the thickness of one's own nail (although there is an individual difference, the thickness of a human nail is generally about 0.4 to 0.75 mm). If a material made mainly of a resin such as polylactic acid and mixed with a silicone-based raw material is formed thinly, the resulting artificial nail can be mounted along the C-curve of a nail having individual differences because of its flexibility.

A coating of ABS resin or polypropylene comes off easily. However, the artificial nail of the present invention which is a porous resin material such as a mixture resin of polylactic acid and silicone-based resin can fix the coating easily. Further, it is possible to coat the surface of C4 in Fig. 2 with a gel nail together with one's own nail in order not to generate a gap.

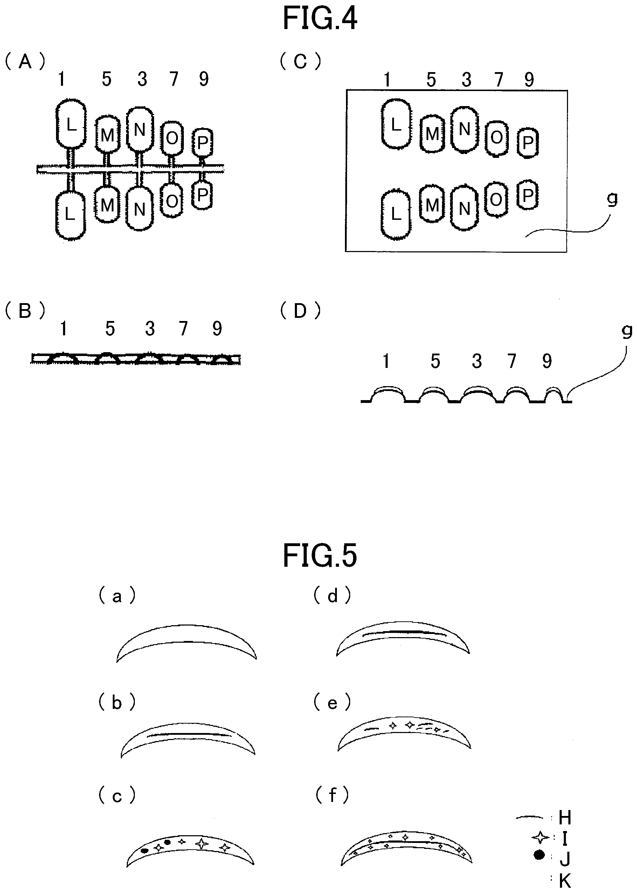

Figs. 4(A) and (C) are examples of manufactured articles. As the reasons are described above, the artificial nail is formed with the root portion bonded to the branch. Alternatively, if it is set on a mold made of three-dimensional polypropylene which is easily releasable like a potting seal or on something like a seal board, it is easy to treat. As shown in Figs. 4(B) and (D), the artificial nail of the present invention is preferably formed according to the curve of one's own nail. The required number of artificial nails in a set is less than a conventional set because the C-curve of the artificial nail of the present invention can be easily adapted to one's own nail and the width, thickness, length, and shape of the artificial nail can be easily adjusted by filing to thus result in close-fitting of the artificial nail, i.e., the artificial nail has good cutting property and polishing property, as compared to a conventional artificial nail.

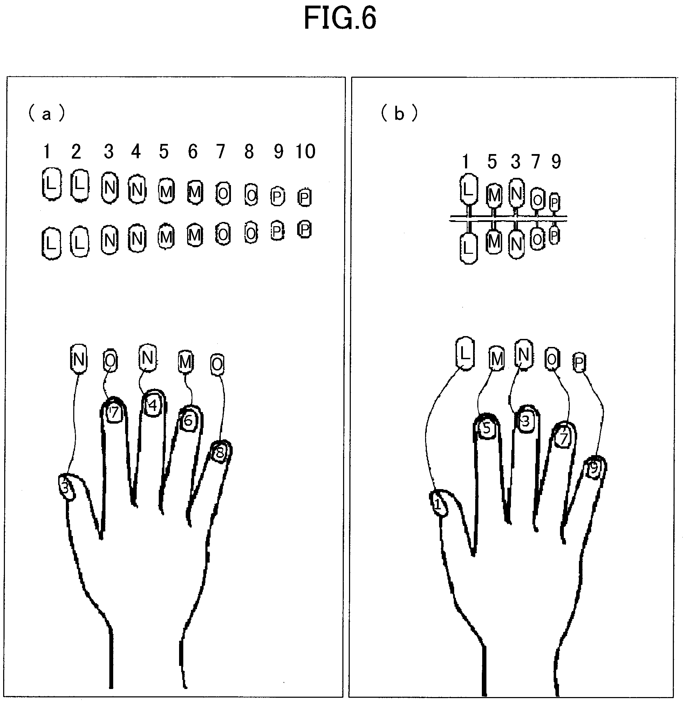

Fig. 6a is a drawing illustrating conventional nail tips and application thereof on nails. The conventional artificial nails for decoration generally include about 20 to 32 right-and-left nails in total with 10 to 16 different sizes in one set. In the case that tips each with different designs are included in the set, it has been impossible to design ideal size for ten (10) fingers depending on the nail size.

Conventionally, artificial nails are often arranged in the order of size from the biggest artificial nail to the smallest artificial nail. However, consumers have to find the appropriate size of the artificial nail by putting each artificial nail on their own nail by themselves actually to determine which artificial nail can adapt to which nail of the finger among their five (5) fingers, which has been troublesome and difficult for the general consumers. For example, in the case a design in which the artificial nails are arranged in order of L, M, N, O, and P is displayed on a package of the product and even if the consumer wishes to wear them according to the design on the package, the size of the artificial nail in the package may not adapt to the actual size of one's own nail and it may result in a totally different combination, for example, N, O, N, M, and O.

On the other hand, the artificial nail of the present invention can be applied according to the layout of the thumb to the pinkie finger as shown because the artificial nail of the present invention can be fit according to individual differences. In order to reduce the trouble of arranging the artificial nails in order of size, the artificial nails are preferably set with arranged in order of one's own nail (Fig. 6b). There is no need to manufacture nail tips with various sizes because the C-curve of the flexible artificial nail of the present invention fits one's own nail. Therefore, the total number of the artificial nails in a set can be reduced and the artificial nail can be applied according to the ideal combination of design.

A small artificial nail is easy to be scattered and lost. However, according to the present invention, the artificial nail can be put on the adaptable nail of the finger without question because the artificial nails are formed by being arranged in the same order as the alignment of the thumb to the pinkie finger. The nail edge may be formed in combination with shapes such as round, oval, pointed, and square off, which are the same as those of conventional artificial nails and various designs.

Fig. 5 is a cross-section view from the side view of the artificial nail. Fig. 5a is an artificial nail of the present invention comprising a dye. Fig. 5b is an artificial nail of the present invention comprising printing. Fig. 5c is an artificial nail of the present invention comprising a dye, lame, and 3D ornamentation. Fig. 5d is an artificial nail of the present invention comprising a dye and printing. Fig. 5e is an artificial nail of the present invention comprising multilayered printing and lame. Fig. 5f is an artificial nail of the present invention comprising a dye, lame, and printing. There may be variations comprising various kinds of patterns other than the variations shown in Figs. 5a to 5f.

The conventional artificial nail for decoration often has coloring, lame, or printing generally formed onto a colorless nail tip. Some nail products include a nail tip which itself is colored or has printing on the backside of the artificial nail. A color or pattern has been formed by coating or printing on the surface of the artificial nail and thus the color or pattern is removed easily when trimming the surface. The artificial nail of the present invention is preferably designed to include a dye, lame, ornamentation, or printing therein and make it difficult to damage the patterns and design even if the nail is trimmed by a nail file in order to adapt to the shape, C-curve, and cuticle line of the individual nail.

People's tastes in pattern and design vary widely and an artificial nail is chosen like a costume depending on TPO (Time, Place, and Occasion), season, and overall fashion. The artificial nail of the present invention can be fitted to one's own nail more adaptable than a conventional artificial nail for decoration by using non-photo curable adhesive because the cuticle line of the artificial nail can be easily trimmed with a file even the artificial nail is a one-color type or a type in which a drawing is painted on the whole surface of the artificial nail. As described above, it is possible to decorate or express the artificial nail as one likes because a rhinestone, nail seal, or art can be added to the nail and coated with gel nail. Not only color and design but also the number of rhinestones may be limited by the regulations of a workplace such as an airline. There is preferably a version of the artificial nail with a simple design in order to correspond to each individual circumstance.

The purpose and feature of the present invention are apparent from the detailed explanation of the invention of the present application and attached figures. However, the figures and flow charts are naturally represented for only the purpose of showing examples of the present invention and shall not define the present invention restrictively.

### Description of Embodiments

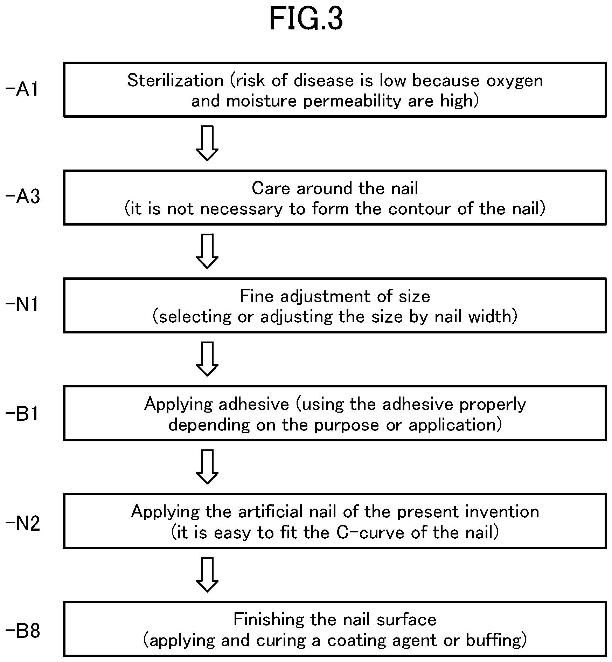

The operation step of the present invention is shown in Fig. 3. The conventional operation of a gel nail generally needs 18 steps of A1 to B12 described in the following operation step list after selecting design and color of the artificial nail, while Nail Contact ™ can simplify the operation steps to six (6) steps, A1, A3, N1, B1, N2, and B8. An example of the operation steps of a gel nail using photocurable resin is described as follows:

### Preparation (preliminary preparation)

- A1: sterilization
- A2: filing (trimming a length or shape of the nail)
- A3: treatment of the cuticles, loose cuticles, hangnails, and cleaning with gauze (forming the outline of the nail around the nail)
- A4: sanding (improving the adhesiveness between the gel and the nail and smoothening the surface)
- A5: dusting
- A6: removing oil and moisture from the surface of the nail

Steps of a gel nail are shown below:
- B1: coating with a base gel
- B2: curing (the steps of B1 and B2 are repeated several times for each of the ten (10) fingers with an LED light)
- B3: designing a base design such as color, French, lame gradation, or color gradation
- B4: curing
- B5: repeating the steps of B3 to B4
   (If color gel is used, it is general to coat the gel twice and curing it between the intervals of coating.)
- B6: designing art (with rhinestones, lame lines, or paint)
- B7: curing
- B8: coating with top gel
- B9: curing
- B10: cleaning off the uncured gel (some kinds of gels are uncured)
- B11: final filing (in some cases, this step is not necessary)
- B12: confirming completion (customer confirmation)

As shown in Fig. 1, the adhesive or an alternative to the adhesive is applied to one's own nail, the artificial nail of the present invention is put on one's own nail, and the artificial nail is further coated with gel nail. The artificial nail of the present invention is treated in line with the operation steps of a gel nail with the portions corresponding to elongating, filing, coloring, art, and design replaced with the artificial nail of the present invention.

The artificial nail of the present invention can be attached to the surface of one's own nail by an adhesive without a gap. A suitable adhesive or coating agent used on this occasion is an adhesive made of polylactic acid and silicone-based resin which makes it difficult to prevent transpiration, which is the same material as that of the artificial nail of the present invention, polyglycolic acid, shellac, and cellulose-based resin, and natural resin-based polish and adhesive having oxygen permeability. A gel nail having oxygen and moisture permeability is also usable and has been commercially available for a long time.

Smoothening the surface of the nail by polishing (buffing) the step on the surface of the nail between one's own nail and the artificial nail or coating once with the resin having moisture and oxygen permeability on the nail according to the steps as described above can prevent the step between one's own nail and the artificial nail, can prevent hooking, and can also make the cuticle lines more natural. This can prevent hooking and onycholysis, realize a more natural appearance and wear feel, and let the artificial nail last longer by preventing injury and lifting.

Conventionally, it has been general to adjust the length of the nail by trimming the edge of the nail tip. There was no choice but to trim or cut the nail edge because dust sticks to the adhesive in the case that the artificial nail for decoration has an adhesive or the artificial nail is one in which sealing is required. However, filing for trimming the shape of the nail edge requires high skill, and thus, it has often been troublesome, taken time, and impaired the design. In the case of the artificial nail of the present invention, the cuticle line around the root or side of the nail is basically filed in order to utilize the design and shape of the edge portion of the artificial nail. In the case that one's own nail is long or it is desired to prolong the nail edge (free edge), the artificial nail is preferably adhered to one's own nail at the edge side apart from the root of one's own nail and the uncovered portion at the root is preferably covered with a gel nail to make the surface smooth and uniform overall.

If it is desired to further strengthen the artificial nail, the top surface or rear surface of the artificial nail is coated with gel after wearing the artificial nail of the present invention to make it thicker and stronger. According to the present invention, the handling and operation of the artificial nail becomes simpler and easier than the conventional operation method using conventional nail form. The present invention needs less trouble, time, and techniques of forming by trimming, and the present invention can prevent health hazards and environmental pollution due to dust, powder, and the odor of a volatile organic solvent as compared to the case of forming a sculptured nail with acrylic resin.

### Detailed Description

A biomass plastic used herein is preferably a synthetic resin with flexibility and porous structure obtained by mixing an environment-friendly resin such as polylactic acid, polyamide 11, and polyamide 12 made of corn or potato with preferably 30% or less and more preferably 10% or less of another material such as an elastomer having low toxicity and high stability. The artificial nail of the present invention is preferably made of a raw material comprising 10% or more, preferably 30% or more, or more preferably 50% or more of the biomass plastic. The artificial nail of the present invention is preferably formed sterically along the shape of the nail of a human or preferably formed such that the artificial nail can be put sterically on the nail.

A polylactic acid is a polymer obtained by polymerizing lactic acid or lactide. The polylactic acid is a biodegradable synthetic resin with high safety to humans and environmentally approved for use as a food container, agricultural article, and medical article in Japan. Also, one or more materials such as biodegradable materials having a high oxygen and moisture permeability including cellulose butyrate, esterified starch, chitosan, shellac, polycarbonate, aromatic modified aliphatic polyester, and polyvinyl alcohol may be mixed with.

A material obtained by mixing a silicone-based material with polylactic acid or a material obtained by mixing polylactic acid with substances such as fibers, saccharides, and proteins using an emulsifying agent such as lauryl PEG-9 polydimethylsiloxyethyl dimethicone, acrylic acid alkyl copolymer, and polyoxyethelene methylpolysiloxane copolymer, gelating the compound, and emulsifying followed by stirring, separating, heat treating, and hydrophobization treating can be also used. New resins using various materials and methods are still under investigation. These new biomass plastic materials may be used in the artificial nail of the present invention.

An example of the material includes a mixed resin, polymer, and solution comprising an additive having a high safety which is used in nail enamel, cosmetics, and food; a protein raw material such as dried albumen, hydrolyzed keratin, and pearl powder; a fiber-based material such as bamboo extraction and silk fiber for increasing strength; a saccharine-based material such as starch syrup and trehalose; a solvent such as ethyl lactate, alcohol, or water; a plasticizer such as glycerine fatty acid ester, polyethylene glycol, and polyglycolic acid.

According to these materials, the artificial nail of the present invention is characterized in that toxic materials are not generated when working, wearing, and burning the material, and the artificial nail degrades naturally by germs or bacteria when buried in the ground in nature.

The artificial nail of the present invention can enable the shortening of operation time because the artificial nail has designability. A dye, lame, or ornamentation may be mixed in the resin, a sheet printed by laser printing, silk printing, or manual printing may be sandwiched between the above biomass synthetic resins, and ornamentation may be embedded in the artificial nail of the present invention by a method such as injection molding, cast molding, vacuum molding, extrusion molding, multiple injection method, or a sandwiching method with a uniform mold.

A gradation design is formed by injecting a resin comprising a pigment or lamé into a curve-shaped mold like a nail and curing it. According to a multiple injecting method in which steps of tilting the mold askew before curing and curing the resin are repeated, a design can be formed which makes the finger or nail to appear longer due to heterotopic effect. According to the artificial nail of the present invention, the design can come close to a design with the look of salon quality which have not been able to be reproduced by the conventional artificial nail for decoration because an ornamentation such as a rose petal and a design with depth of feeling can be formed by the multiple injecting method or a method using a print sheet and 3D parts together.

According to the manufacturing method, the artificial nail of the present invention can be formed such that the artificial nail can adapt to the shape of the individual nail and can maintain decorativeness because the printing is not damaged easily as compared to the conventional artificial nail in which the printing is on the surface of the artificial nail even if a convex surface of the artificial nail is cut, polished (buffed), or filed in order not to hook on clothes or hair. The outline of the artificial nail of the present invention has a smooth curve and thereby less hooking occurs. The thickness of the artificial nail at the root is preferably from that of a sheet or film to about 2.5 mm. The applied adhesive adhered to the surface of the nail can be spread over the surface of the nail by an action such as infiltration and surface tension because the artificial nail is formed into a shape such that the artificial nail can adhere to the nail surface or is in the form of a sheet or film.

In a technique referred to as design sculpture, an art is generally embedded in a main body like that of an underwater flower or a snow globe. As is the case with Nail Contact ™, the 3D ornamentation may be included therein. According to the artificial nail of the present invention, it is not necessary to use nail form unlike the sculpture nail using acrylic resin or gel, and to trim more than in the case of the conventional design sculpture because the artificial nail of the present invention includes color, art, or design which is not easily altered when trimming. As a result, the artificial nail of the present invention can significantly shorten operation time. Furthermore, according to the artificial nail of the present invention, a high quality of the design sculpture which needs a significantly advanced artisan skill and high cost can be realized by the above manufacturing method.

The present invention provides care for respiratory diseases because the amount of trimming can be significantly reduced and the generation of dust can be suppressed as compared to the conventional operation method of the sculpture nail. In addition, the pollution of one's clothes and premises can be prevented. Further, the trouble of cleaning can be reduced because the disposal of liquid waste is not necessary and the amount of scattered dust is significantly reduced.

When the polylactic acid is used as a main ingredient of the artificial nail of the present invention, the artificial nail of the present invention has characteristics of moisture management effect due to the action of lactic acid and suppression of mold and bacteria due to its weak acidity, which is the same acidity as the skin, as compared to the other biomass plastics. The artificial nail of the present invention has a porous tunnel structure in which acetone or ethanol can easily permeate the nail when removing the artificial nail. Thus, the time for removing the artificial nail can be shortened as compared to the conventional gel nail. The artificial nail of the present invention has a structure such that the artificial nail can be easily removed while preventing the defatting or drying of one's own nail.

The closer to the nail plate, the more active transpiration activity becomes, and the closer to the edge of the nail, the lower the water content of the nail. Thus, if the artificial nail of the present invention is adhered to the nail without covering the growing edge of the nail, the artificial nail of the present invention may be made of a material with low moisture and oxygen permeability or may have a thickness of 3 mm or more. By not preventing the transpiration activity, the user can live their daily life while wearing the artificial nail because the wear feel is good and the artificial nail lasts longer. In addition, the artificial nail of the present invention can prevent diseases such as green nail because lifting occurs less than the conventional artificial nail.

If transpiration activity is not prevented, the trouble of frequent attachment and detachment of the artificial nail and the damage of the nail can be reduced. Acetone solution used in removing the gel nail may dry or damage the nail. If transpiration action is not prevented, "fill-in" (filling) (a technique of embedding a vacant portion generated at the growing edge when the nail grows) can be applied. The damage for the nail can be suppressed because the present invention is a technique which can be used in combination with "fill-in" (filling).

In the case of a polish (manicure), a transparent base coating does not stand out easily even if the base coating protrudes from the nail to the skin. However, in the case of applying a color coating, the cuticle line often becomes jagged and the surface of the nail often becomes undulate before the color coating dries because it is said that it takes about 24 hours for the inside of the color coating to completely dry. The artificial nail of the present invention has none of the troubles described above and is easy to be finished finely without manual dexterity because the artificial nail of the present invention is already formed and cured. When the cuticle line is formed finely, it looks beautiful.

In terms of design, the artificial nail of the present invention is easy to be matched with the root of one's own nail naturally when wearing it if the portion of the cuticle line is transparent. Thus, a nail design in which the root portion of the artificial nail is colorless such as French nails, color gradation nails, and lamé gradation nails using the adhesive made of photocurable resin can increase the variation of the kind of adhesives and the variation of the method for attaching the artificial nail as compared to a one-colored design which does not transmit light.

A design in which the root portion of the artificial nail is transparent is often ordered at an actual nail salon because the portion of the grown own nail stands out in the case that the artificial nail is one-colored or colored at the root of the artificial nail. Thus, the artificial nail and the use method of the present invention are preferably designed such that these problems can be solved.

Namely, the artificial nail of the present invention can be cut, ablated, and polished, and the surface of the artificial nail can be polished or buffed because the printing or ornamentation is not formed on the surface. Therefore, the position on the nail plate on which the artificial nail is put can be decided freely. In the case of the design in which the root of the artificial nail is clear (e.g. gradation nail), the artificial nail of the present invention can be adapted to a person whose nail plate is long or who prefers long nails and the step of highly-skilled shaping of the nail edge with a file is almost not necessary because the artificial nail of the present invention can be put on the nail by leaving a space from the root and a space between one's own nail and the artificial nail of the present invention can be filled in a French style or with nail gel as described above.

Conventionally, filing the nail edge to form a beautiful shape and ornamenting the nail with complex art have been difficult and needed skill. According to the present invention, a user can easily operate the application by oneself with significantly shortened time even if the operation hand is a non-dominant hand.

Regarding the adhesive, almost all types of adhesives such as those which can be cured by drying, moistening, and mixing two (2) liquids can be used because the artificial nail of the present invention has air and moisture permeability. For example, when one liquid humidity reaction-type elastic adhesive consisting of acrylic-modified silicone resin is used, the artificial nail can be adhered to the surface of the nail strongly even if the nail has more irregularities than usual. When a nitro cellulose-based adhesive is used, the artificial nail can be removed with smaller burden on the nail than a conventional gel nail because the adhesive can be dissolved in acetone-free enamel remover.

The gel nail can be used as the adhesive of the artificial nail of the present invention having optical transparent design. There has been a risk that the user gets a rash or burn when the conventional nail glue used in adhering the artificial nail for decoration is attached to skin or clothes by accident. However, as described above, the present invention has an advantage to select the kind of adhesive attached to the nail depending on the nail type and living environment.

Since the artificial nail of the present invention is porous and has a tunnel structure, the time can be shortened due to easiness to remove the artificial nail without trouble as compared to the current gel nail, and the damage to the nail can be reduced. Namely, the present invention can adapt to various lifestyles and individual differences of the consumers and can develop and propose various variations of the methods of removing the artificial nail which is safer and more secure for the human and the environment.

The present invention can reduce the risk of allergic reaction when continuing to use the gel nail because the present invention can reduce the working processes of operating and applying the uncured gel as compared to the operation process of the gel nail. If an allergy-free adhesive is used to adhere the artificial nail to one's own nail, it can be expected to realize a full and glossy nail like a gel nail even if the user has a gel nail allergy.

According to the present invention, there is no problem that the colored gel remains uncured because the colored portion is already solidified from the liquid state (Fig. 1, C3). The problem of deposition of pigment to one's own nail also occurs less. Also, the problems of uneven coating of the color gel and brush marks do not occur. The problems of cracking the color of the nail edge and peeling off the artificial nail are reduced. As a result, requests for fixing the nails and complaints to the nail salon can be reduced.

The photocurable resin-based gel nail shrinks by about 8% to 12% depending on the kind of the product, the wattage of the curing light, and usage. When the gel nail is used as the adhesive, the problem that the nail looks bigger than one's own nail by the polymerization shrinkage occurs less, which is incidental to the conventional artificial nail, because with the artificial nail of the present invention, the adhesive layer and the surface coating layer are finally integrated and hardened in three (3) steps from putting the artificial nail on the nail surface.

Although fingernails have individual differences, it is said that a healthy nail has a three-layer structure made of hard keratin, and the thickness of the nail is about 0.5 to 0.75 mm. The nail comprises moisture, has flexibility, and changes shape flexibly. However, the nail may become thinner because of aging, nutrition deficiency due to dietary irregularities caused by a recent diet trend or overwork, diseases, and repeated replacement of the gel nail over a long-term, and may become brittle because of drying the nail due to frequent sterilization, hand-washing, and use of a synthetic detergent or medical agent. The artificial nail of the present invention can be also used for protecting such nails.

The artificial nail of the present invention may be used not only for aesthetic purposes such as fashion and dressing up, but also for providing a design which is close to one's healthy and own natural nails. The artificial nail of the present invention can be also used for the purpose of reinforcing the nail in the case that one's own nails are naturally thin and easy to crack or chip. The artificial nail of the present invention can be also used for strengthening or protecting the nail which has less moisture content due to aging, loses flexibility and transparency due to modification of fiber protein composing the nail, has conspicuous vertical stripes, or is easy to crack.

When the nail is damaged by injury, a person has no choice but to protect the nail with taping even if the person goes to a hospital. The artificial nail of the present invention can be used as a homecare product which is easy to use for people suffering from the wrong shape or color of nail which is caused by an accident or one's constitution. The artificial nail of the present invention can be used for people who wish to strengthen their nail for playing a musical instrument, those who suffer from peeling or cracking of the nail due to work using their fingertips or nails, and those who suffer from a nail biting habit.

Opportunities to see someone's nails have been increased because many people use personal computers recently. As a result, the gel nail became a trend in the late Heisei era and nail fashion has become popular largely among young women such that home nail care and coloring have become fashion. However, it is said that only about 30 percent of Japanese women utilize a nail salon because the cost is high. Although some people manicure or apply artificial nails for decoration at home, one may damage their own nails due to inappropriate operation methods. The provision of an easily removable artificial nail of the present invention may improve the skill level for applying them by oneself, reduce the cost of nail salon services, improve the overall techniques including care and service in the nail salon, increase the number of the customers, and spread the culture of nail fashion.

In a nail salon, there is often a case that the size or length of the customer's nail is not identical to that of the sample. In such the case, the customer may feel a sense of discomfort like that caused by trying to wear clothes which are the same as those that a mannequin is wearing in a store. According to the present invention, the discrepancy between the customer and the nail technician can be reduced because the artificial nail of the present invention can provide a design as it is. Further, the present invention enables not only the shortening of the actual operating time but also takes advantage of one's spare time because the design of the artificial nail can be preliminarily made based on the artificial nail of the present invention before the customer comes to the shop. There is also an advantage that remote counseling and design meetings can be held by telephone or Internet where pictures can be exchanged.

The present invention also enables to enhance the reproducibility and mass production of the artificial nail having a design with complex minute art which needs time, a design which is difficult to express by painting manually, or an identical design because the artificial nail which has been conventionally made to order in the case of the gel nail or sculptured nail can be designed by applying a manual technique or printing technology at the geographically-separated area by the present invention. Moreover, the present invention enables users to order a work designed by a famous nail salon which it is difficult to make a reservation or by a noted nail artist who lives far away.

As with faces, decorating such small nail has been a way for people to somewhat express themselves for years—expressing their inner self, beauty, and healthiness with painted or decorated nails and enjoying art as a part of fashion since ancient times. As with appearance and clothing, doing one's nails as a part of sanitation and grooming has a social and cultural meaning to show a concern to other people regardless of gender or age. It is said that doing one's nails is a characteristic of fashion showing one's aesthetic feelings. The artificial nail of the present invention can enhance the function of the nail and can provide safer and easier nail techniques to many people as compared to the conventional ones.

### Description of Reference Numerals

C1: Nail
C2: Adhesive (or gel nail)
C3: Artificial nail of the present invention
C4: Buffing or applying covering agent
i-iii: Order to laminate
C5: Figure of multiple-layered structure
g: Board used in the present invention
L-P: Variation of designs of artificial nails
1-10: One's own nails and sizes corresponding to artificial nails
H: Printing or seals
I: Lame
J: 3D parts such as rhinestones
K: Pigment

## Claims

1. An artificial nail,
wherein the artificial nail comprises a synthetic resin comprising a biomass plastic and wherein the artificial nail is formed along a nail shape.

2. The artificial nail according to claim 1,
wherein a main ingredient is polylactic acid, polyamide 11, or 12; and
wherein the artificial nail comprises an elastomer.

3. The artificial nail according to claim 1, **characterized in that** a lamé, ornamentation, or printing is included in the resin.

4. The artificial nail according to claim 1, wherein the artificial nail has a structure such that design is not damaged easily when the surface of the artificial nail is polished.

5. The artificial nail according to claim 1, **characterized in that** the artificial nails are formed by being arranged in the same order as the alignment of the nail from the thumb to the pinkie finger.

6. An operation method using the artificial nail of claim 1, **characterized in** use of specific material and structure enables to spread an adhesive between the artificial nail and the surface of a nail to thus adhere both sides closely.

7. An operation method using the artificial nail of claim 1, **characterized in that** the method comprises buffing or covering of the surface of the nail with a coating forming component.

## Amended claims

### Amended claims under Art. 19.1 PCT

1. A molded artificial nail,
wherein the artificial nail comprises a synthetic resin comprising a biomass plastic and wherein the artificial nail is formed along a nail shape.

2. The artificial nail according to claim 1,
wherein a main ingredient is polylactic acid, polyamide 11, or polyamide 12; and
wherein the artificial nail comprises an elastomer.

3. The artificial nail according to claim 1 or 2, **characterized in that** a lame, ornamentation, or printing is included in the artificial nail.

4. The artificial nail according to any one of claims 1 to 3, wherein the artificial nail has a structure such that design is not damaged easily when the surface of the artificial nail is polished.

5. A set of artificial nails according to any one of claims 1 to 4, **characterized in that** the artificial nails are formed by being arranged in the same order as the alignment of the nail from the thumb to the pinkie finger.

6. A set of artificial nails according to any one of claims 1 to 4, wherein the artificial nails are arranged with facing convex portions of the artificial nails upward.

7. A set of artificial nails according to any one of claims 1 to 4, wherein the set is formed with the root of the artificial nail bonded to a branch.

8. An operation method using the artificial nail according to any one of claims 1 to 4, **characterized in that** an adhesive is spread between the artificial nail and the surface of a nail to thus adhere both sides closely.

9. An operation method using the artificial nail according to any one of claims 1 to 4, **characterized in that** the method comprises buffing or covering of the surface of the nail with a coating forming component.
